Europäisches Patentamt

European Patent Office

Office européen des brevets

(19)

(11) Veröffentlichungsnummer: **0 104 490**
**A2**

# (12) EUROPÄISCHE PATENTANMELDUNG

(21) Anmeldenummer: 83108621.0

(22) Anmeldetag: 01.09.83

(51) Int. Cl.³: **G 06 F 11/16**

(30) Priorität: 28.09.82 DE 3235762

(43) Veröffentlichungstag der Anmeldung:
04.04.84 Patentblatt 84/14

(84) Benannte Vertragsstaaten:
AT BE CH FR GB IT LI NL SE

(71) Anmelder: Fried. Krupp Gesellschaft mit beschränkter
Haftung
Altendorfer Strasse 103
D-4300 Essen 1(DE)

(72) Erfinder: Bockhoff, Werner
Alter Heerweg 38
D-2800 Bremen(DE)

(72) Erfinder: Landsberg, Gerhard
Rumpsfelder Heide 34
D-2803 Weyhe(DE)

(72) Erfinder: Morgner, Wilhelm
Gerhard-van-der-Pollstrasse 13
D-2807 Achim(DE)

(54) Verfahren und Vorrichtung zur Synchronisation von Datenverarbeitungsanlagen.

(57) Es wird ein Verfahren zur Synchronisation von mehreren Datenverarbeitungsanlagen angegeben, die zur Prozeßsteuerung im Stand-By-Betrieb identische Programme bearbeiten. Dabei sollen durch Interrupts ausgelöste Datentransfers erst ausgeführt werden, wenn alle Datenverarbeitungsanlagen den gleichen Zustand in der Programmverarbeitung erreicht haben. Dieser Zustand wird durch Zählen von Befehlen und Vergleichen der Zählerstände derart bestimmt, daß nach dem Auftreten eines Interrupts für die Datenverarbeitungsanlage mit dem höchsten Zählerstand die weitere Verarbeitung von Befehlen verhindert wird, und die anderen Datenverarbeitungsanlagen die Verarbeitung so lange fortsetzen, bis sie den gleichen Zählerstand erreicht haben. Erst danach wird der synchrone Datentransfer ausgelöst.

Eine Vorrichtung zur Durchführung des Verfahrens ist angegeben, bei der die erforderlichen Baugruppen in einer Überwachungseinheit zusammengefaßt sind.

EP 0 104 490 A2

./...

Croydon Printing Company Ltd.

Fig.1

FRIED. KRUPP GESELLSCHAFT MIT BESCHRÄNKTER HAFTUNG
in Essen

Verfahren und Vorrichtung zur Synchronisation von Datenverarbeitungsanlagen
============================================

Die Erfindung betrifft ein Verfahren zur Synchronisation von zwei oder mehr Datenverarbeitungsanlagen der im Oberbegriff des Anspruchs 1 angegebenen Art und eine Vorrichtung zum Ausüben des Verfahrens.

Bei derartigen Verfahren ist es erforderlich, den
asynchronen Verarbeitungsfortschritt in jeder Datenverarbeitungsanlage zu überprüfen und so zu beeinflussen, daß der Zustand der Programmverarbeitung unmittelbar vor einem Datentransfer in allen
Datenverarbeitungsanlagen identisch erreicht wird.

Bei technischen, physikalischen oder chemischen Prozessen, z. B. Anlagen der Energieversorgung, der
Nachrichten- und Verkehrstechnik oder der Verfahrenstechnik, werden Datenverarbeitungsanlagen als
sog. Prozeßrechner zur Steuerung, Regelung und
Überwachung eingesetzt. Da ein Ausfall der Prozeßsteuerung durch Stillstand der Datenverarbeitungsanlage insbesondere bei kritischen Prozessen
vermieden werden muß, arbeiten mehrere Datenverarbeitungsanlagen im sog. Stand-By-Betrieb zusammen.
Bei Ausfall einer den Prozeß aktiv führenden Datenverarbeitungsanlage wird dann unmittelbar auf eine
andere im Stand-By-Betrieb arbeitende Datenverar-

0104490

beitungsanlage umgeschaltet, die dazu immer parallel das identische Programm bearbeitet hat und gleichermaßen mit allen Prozeßdaten versorgt worden sein muß.

Die Datenverarbeitung kann innerhalb der Datenverarbeitungsanlagen so lange asynchron erfolgen, wie kein Datentransfer, z. B. von oder zum Prozeß, durchgeführt wird,   da bei identischen Programmen in den Datenverarbeitungsanlagen und gleichem Datenbestand in den zugehörigen Speichern keine Abweichungen in den Ergebnissen auftreten können. Erst wenn prozeßrelevante Datentransfers von und zu den Speichern der Datenverarbeitungsanlagen bei unterschiedlichem Programmfortschritt durchgeführt werden, ergeben sich abweichende Ergebnisse in den einzelnen Datenverarbeitungsanlagen, die beim Umschalten vom Stand-By- auf Aktiv-Betrieb Fehler in der Prozeßführung zur Folge haben.

Es ist bekannt, bei Doppel- bzw. Mehrfachrechnersystemen den Programmablauf des prozeßführenden und des/der Stand-By-Rechner durch spezielle, auf die Mehrfachkonfiguration der Rechner abgestimmte Programme (Software) zu steuern und zu überwachen. Diese Programme müssen vom Anwender für jedes Steuerungs- und Regelproblem der jeweiligen Rechnerkonfiguration gesondert erstellt werden. Dies bedeutet bei sehr komplexen Systemen einen erheblichen Zusatzaufwand, der sich aus dem erhöhten Bedarf an Rechenleistung für diese zusätzlichen Programme ergibt und die Verarbeitungszeiten bei der Prozeßsteuerung erheblich verlängert. Diese Programme zur Steuerung des Mehrfachrechnerbetriebes enthalten beispielsweise einzelne Befehle, die einen Datenaustausch zwischen den einzelnen Datenverarbeitungsanlagen bewirken und anhand dessen der Bearbeitungsfortschritt ermittelt wird. Sie stellen reine Software-Steuerungen des Mehrfachrechnerbetriebes dar, die zusätzlich neben der eigentlichen Prozeßsteuerung ablaufen müssen.

Es ist ferner aus der DE-PS 21 57 982 bekannt, in einer Multiprozessor-Datenverarbeitungsanlage mit unabhängig arbeitenden Prozessoren Taktsteuerungen vorzusehen, um die einzelnen Prozessoren zum Datenaustausch mit einem Speicher in Gleichlauf zu bringen. Eine Taktsynchronisation ist für ein Mehrfachrechnersystem zur Prozeßsteuerung jedoch viel zu aufwendig und von erheblichem Zeitbedarf allein für die Taktsteuerungsaufgaben.

Der Erfindung liegt daher die Aufgabe zugrunde, ein Verfahren anzugeben, das eine von der Anwender-Software unabhängige befehlsgenaue Synchronisation bei geringstem zusätzlichen Zeitaufwand und eine einfache Hardware-Realisierung ermöglicht.

Diese Aufgabe wird bei einem Verfahren der im Oberbegriff des Anspruchs 1 definierten Art erfindungsgemäß durch die im Kennzeichenteil des Anspruchs 1 angegebenen Merkmale gelöst.

Bei dem erfindungsgemäßen Verfahren werden aus einem Speicher der Datenverarbeitungsanlage Befehle gelesen und in einem Zentralprozessor verarbeitet. Diese Befehle, häufig auch als Makros oder Makrobefehle bezeichnet, müssen jeweils vollständig bearbeitet werden und dürfen nicht unterbrochen werden. Da die den Prozeß steuernden Programme in allen am Mehrrechnersystem beteiligten Datenverarbeitungsanlagen identisch sind, alle Befehle in glei-

cher Reihenfolge und Programmverzweigungen unter gleichen Bedingungen ausgeführt werden müssen, ist der Synchronlauf der Datenverarbeitungsanlagen besonders einfach an der Anzahl der verarbeiteten Befehle zu ermitteln.

Datenverarbeitungsanlagen zur Steuerung von Prozessen arbeiten im allgemeinen taktgesteuert, wobei nicht auszuschließen ist, daß die Takte jeder einzelnen Datenverarbeitungsanlage voneinander abweichen und die vergleichbaren Befehle zu unterschiedlichen Zeitpunkten bearbeitet werden. Die Abweichungen bleiben jedoch dann ohne Auswirkungen, wenn sichergestellt ist, daß der Datenaustausch mit dem Prozeß oder der Prozeßperipherie bei gleichem Bearbeitungsfortschritt aller Datenverarbeitungsanlagen erfolgt. Das heißt, daß alle Datenverarbeitungsanlagen nach dem gleichen Makrobefehl die fortlaufende Bearbeitung unterbrochen haben und in eine Programmroutine für den Datentransfer eintreten. Auf diese Weise ist dann sichergestellt, daß bei der Verarbeitung gleicher Befehle in allen Datenverarbeitungsanlagen auch gleiche Daten gespeichert sind, die durch den Datentransfer nur bei gleichem Bearbeitungszustand aller Datenverarbeitungsanlagen verändert werden. Der Bearbeitungsfortschritt ergibt sich dabei unmittelbar aus dem Vergleich der Zählerstände von den jeder Datenverarbeitungsanlage speziell zugeordneten Zählern.

Die Aufforderung zu einem Datentransfer erfolgt über einen Interrupt, der vom Prozeß an die Datenverarbeitungsanlagen abgesetzt oder in einer der Datenverarbeitungsanlagen erzeugt wird. Interrupts werden dabei in den Datenverarbeitungsanlagen nur zu festgelegten Zeiten zwischen zwei Makrobefehlen abgefragt und erkannt. Erst erkannte Interrupts ergeben ein Interrupt-Signal, das für die vorauseilende Datenverarbeitungsanlage wirksam wird und die Verarbeitung weiterer Befehle unterbricht. Dadurch wird auch das Zählen unterbrochen und der Zähler behält den Stand zum Zeitpunkt des Interrupts. Für alle nacheilenden Datenverarbeitungsanlagen bleibt das Interrupt-Signal so lange unwirksam,bis die gleiche Anzahl Befehle wie in der vorauseilenden Datenverarbeitungsanlage verarbeitet worden ist. Erst dann wird ggf. nacheinander entsprechend dem Verarbeitungsfortschritt der Programmablauf auch in den nacheilenden Datenverarbeitungsanlagen unterbrochen. Wenn sichergestellt ist, daß alle Datenverarbeitungsanlagen die gleiche Anzahl oder Menge von Makrobefehlen bearbeitet haben, wird in einer gesonderten Mikroprogrammroutine ein Datentransfer synchron ausgelöst, so daß alle Datenverarbeitungsanlagen neue Daten im gleichen Bearbeitungszustand in ihren Speicher laden oder aus ihrem Speicher auslesen.

Das erfindungsgemäße Verfahren ist in vorteilhafterweise unabhängig von den internen Takten der Datenverarbeitungsanlagen, da als Referenz für den Bearbeitungsfortschritt die Mengen verarbeiteter Befehle (Makros) verglichen werden. Dabei ist die Häufigkeit der Synchronoperationen vorteilhaft auf ein Minimum beschränkt und nur erforderlich, wenn zu Datentransfers, ausgelöst durch Interrupts, aufgefordert wird. Ein streng periodischer Synchronvorgang ist weder bei der Konstruktion der Datenverarbeitungsanlagen noch vom Programmierer bei der Programmentwicklung vorzusehen. Durch die Übertragung der Synchronisationsaufgaben auf ein Überwachungsgerät wird das Anwenderprogramm frei von derartigen, die Kommunikation zwischen mehreren Datenverarbeitungsanlagen steuernden Programmteilen.

Eine vorteilhafte Ausführungsform des erfindungsgemäßen Verfahrens ergibt sich aus Anspruch 2. Die Fetch-Impulse werden vom Steuerwerk eines Zentralprozessors der Datenverarbeitungsanlage an ein Programmregister übertragen, das die Speicheradresse des nächsten zu verarbeitenden Befehls enthält. Das Steuerwerk veranlaßt so das Lesen des unter der Speicheradresse abgelegten Befehls und seine Verarbeitung. Der Befehl setzt sich als Makrobefehl aus einer Vielzahl von Einzelinstruktionen, sog. Mikrobefehlen, zusammen, deren letzte dem Steuerwerk das Ende der Bearbeitung des Makrobefehls anzeigt. Mit einem nächsten Fetch-Impuls wird die inzwischen geänderte Speicheradresse für den nächsten Befehl aus dem Programmregister ausgelesen. Die Änderung des Programmregisterinhalts kann dabei durch zählerartige, automatische Inkrementierung oder Laden der nächsten Speicheradresse unter der Kontrolle des Steuerwerks, z. B. bei Programmverzweigungen, erfolgen.

Da Umfang und Inhalt des Makrobefehls auf die Synchronisation keinerlei Auswirkungen haben und deshalb nicht interpretiert zu werden brauchen, wird das Verfahren dadurch besonders vereinfacht, daß allein die vom Steuerwerk abgegebenen Fetch-Impulse gezählt werden und der Verarbeitungsfortschritt anhand der Zählerstände ermittelt wird.

Eine weitere vorteilhafte Ausführungsform des erfindungsgemäßen Verfahrens ergibt sich auch aus Anspruch 3. Die vom Prozeß erzeugten Interrupts werden gesondert an jede Datenverarbeitungsanlage übertragen. Im Prozeßbussystem oder in den Prozeßinterfaces können jedoch auch fehlerhafte Interrupts erzeugt werden, die dann jedoch nicht in
allen Datenverarbeitungsanlagen gleichzeitig anstehen. Andererseits können durch unterschiedlichen peripheren Aufbau der Datenverarbeitungsanlagen die Interrupts erst mit zeitlichen Verzögerungen auftreten. Die einander entsprechenden, binären Interrupts der Datenverarbeitungsanlagen werden nach Art einer Vorsynchronisation zu einem Interrupt-Signal zusammengefaßt, das nur wirksam wird,
wenn entweder die Interrupt-Signale aller oder zumindest von zwei Datenverarbeitungsanlagen anstehen.
Damit werden das Unterbrechen der Verarbeitung durch
Störungen und ein vorzeitiges Einleiten der Interrupt-Verarbeitung auf einfache Weise vermieden. Das
aktivierte Interrupt-Signal löst ein Speichern des
Vergleichszustandes und damit das Interrupt-Enable-
Signal für die Datenverarbeitungsanlage mit dem
höchsten Zählerstand aus und bereitet das Speichern
des Vergleichszustandes "Zählergleichstand" für alle anderen Datenverarbeitungsanlagen vor, dessen
Erreichen dann alle übrigen Interrupt-Enable-Signale bewirkt.

In einer weiteren vorteilhaften Ausführungsform des
erfindungsgemäßen Verfahrens nach Anspruch 4, bewirkt das Interrupt-Signal unmittelbar ein Stoppen
des Zählers, wohingegen das Unterbrechen der Verarbeitung weiterer Befehle erst verzögert ausgelöst
wird.   Dadurch werden Laufzeitverzögerungen in Baugruppen und auf Verbindungsleitungen berücksichtigt.

In einer weiteren besonders vorteilhaften Ausführungsform des erfindungsgemäßen Verfahrens nach Anspruch 5 wird durch das Interrupt-Enable-Signal ein
Mikroprogramm gestartet. Dieses Mikroprogramm ist aus Mikrobefehlen aufgebaut und speziell für die Interrupt-Verarbeitung gespeichert ohne Rückwirkungen auf das Programmregister. Das Mikroprogramm würde bei einer Prozeßsteuerung mit nur einem Rechner unmittelbar durch das Interrupt-Signal gestartet. Für die Mehrrechnerkonfiguration wird es im wesentlichen unverändert beibehalten, jedoch erst durch das Interrupt-Enable-Signal gestartet, in dem Vorsynchronisation und Zählerauswertung berücksichtigt sind.

Das Mikroprogramm enthält die für eine Interrupt-Verarbeitung üblichen Mikrobefehle, um Registerinhalte zu retten und einen Wiederanlauf der Datenverarbeitungsanlage nach vollendeter Interrupt-Verarbeitung zu ermöglichen. Es enthält weiterhin Befehle und Daten zur Vorbereitung der Datentransferwege zwischen Prozeß und Datenverarbeitungsanlage. Zum Auslösen des Datentransfers wird durch einen speziellen Mikrobefehl ein binäres Synchronsignal generiert.

Eine weitere vorteilhafte Ausführungsform des erfindungsgemäßen Verfahrens ergibt sich aus Anspruch 7. Dabei wird das direkte Auslösen des synchronisierten Datentransfers vom Anstehen aller Synchronsignale der Datenverarbeitungsanlagen abhängig gemacht und so sichergestellt, daß nach einer makrobefehlsgenauen Synchronisation im Interrupt-Mikroprogramm eine Feinsynchronisation mikrobefehlsgenau unmittelbar vor Beginn des synchronisierten Datentransfers erreicht wird.

In einer weiteren vorteilhaften Ausführungsform des erfindungsgemäßen Verfahrens wird das Synchron-Accept-Signal erst dann gelöscht, wenn die Synchron- Signale aller Datenverarbeitungsanlagen mikroprogrammgesteuert abgeschaltet sind. Dadurch ist gewährleistet, daß in jeder Datenverarbeitungsanlage der Datentransfer mit Sicherheit beendet wird.

In einer weiteren vorteilhaften Ausführungsform gemäß Anspruch 9 des erfindungsgemäßen Verfahrens ist es vorgesehen, Interrupt-Signale durch programmierte Befehle auszulösen. Dadurch kann eine Zwangssynchronisation nach einer vorgebbaren Anzahl von Befehlen erreicht werden und der Stellenumfang der Zähler gering gehalten werden, wenn bei umfangreichen Makroprogrammen nur wenige Datentransfers zwischen Datenverarbeitungsanlagen und Prozeß erfolgen.

Eine vorteilhafte Vorrichtung zum Ausüben des erfindungsgemäßen Verfahrens ergibt sich aus Anspruch 11. Dabei sind die Datenverarbeitungsanlagen an eine Überwachungseinheit angeschlossen, in der die von den Datenverarbeitungsanlagen übertragenen Interrupts ausgewertet werden und in der sich die Zähler für Fetch-Impulse mit nachgeschalteten Vergleichern befinden, um das Interrupt-Enable-Signal zum Auslösen des Interrupt-Mikroprogramms zu veranlassen. Die vom Interrupt-Mikroprogramm generierten Synchronsignale werden ebenfalls zur Überwachungseinheit übertragen und ausgewertet, um das Synchron-Accept-Signal zum Auslösen des synchronisierten Datentransfers zu erzeugen. Alle für eine Mehrfachrechner-Konfiguration zusätzlichen Baugruppen sind somit in dieser Überwachungseinheit zusammengefaßt, wobei die Überwachungseinheit im wesentlichen mit bereits vorhandenen Ein- und Ausgängen der Datenverarbeitungsanlagen verbunden ist und der zusätzliche schaltungstechnische Aufwand zur Anpassung einer Datenverarbeitungsanlage an eine Mehrrechner-Konfiguration weitestgehend vernachlässigbar ist.

Die Vorrichtung zur Synchronisation wird vorteilhaft durch die Ansprüche 12 bis 14 weitergebildet.

Die Erfindung ist anhand von in der Zeichnung dargestellten Ausführungsbeispielen einer Vorrichtung zur Synchronisation von Datenverarbeitungsanlagen im folgenden näher beschrieben.

Es zeigen:

Fig. 1    ein Signaldiagramm mit bei der Synchronisation relevanten binären Signalen,

Fig. 2    ein Blockschaltbild der Vorrichtung in Verbindung mit zwei Datenverarbeitungsanlagen,

Fig. 3    ein Blockschaltbild einer Zählereinheit und einer Vergleichseinheit der Vorrichtung gemäß einem zweiten Ausführungsbeispiel für ein Mehrrechnersystem,

Fig. 4    eine Zusatzschaltung zur Vorrichtung gemäß einem dritten Ausführungsbeispiel zum gleichzeitigen Start aller Interrupt-Prozessoren des Mehrrechnersystems,

Fig. 5    eine Logikschaltung zur Vorrichtung nach Fig. 2.

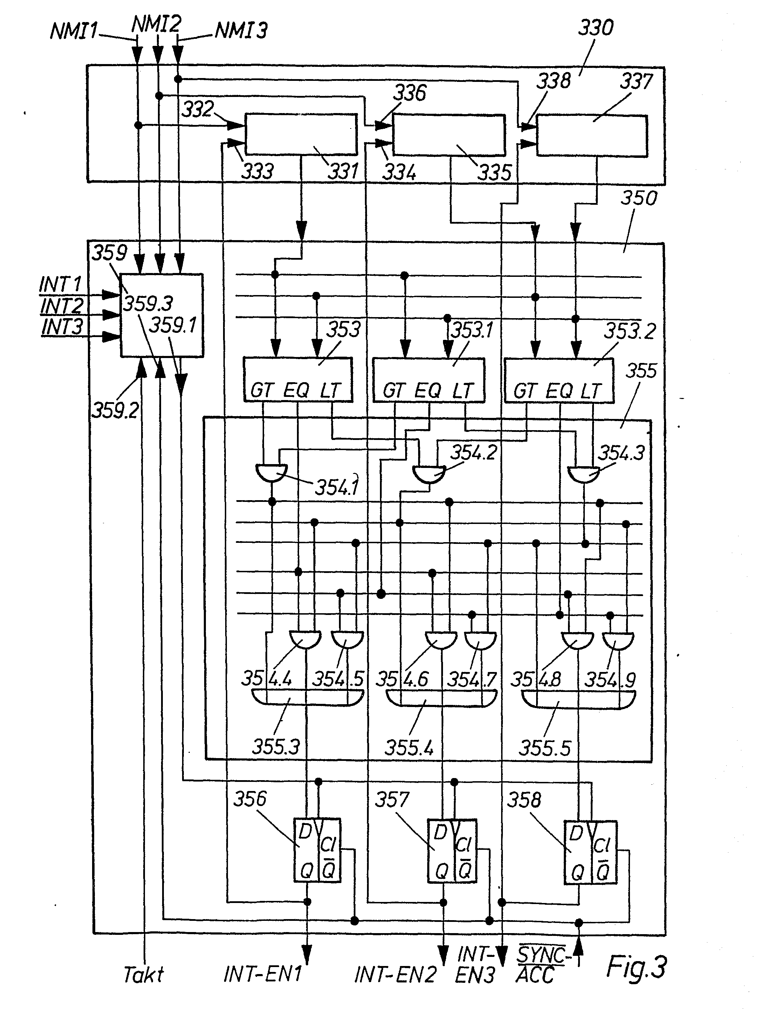

Im folgenden wird die Erfindung zunächst am Beispiel einer Doppelrechnerkonfiguration beschrieben, da der Ausbau zu einem Mehrrechnersystem ohne grundlegende Schaltungsänderungen, sondern allein durch Vervielfachung von wenigen Baugruppen und Ein-/Ausgängen leicht möglich ist, wie weiter unten bei der Beschreibung der Fig. 3 ausgeführt ist.

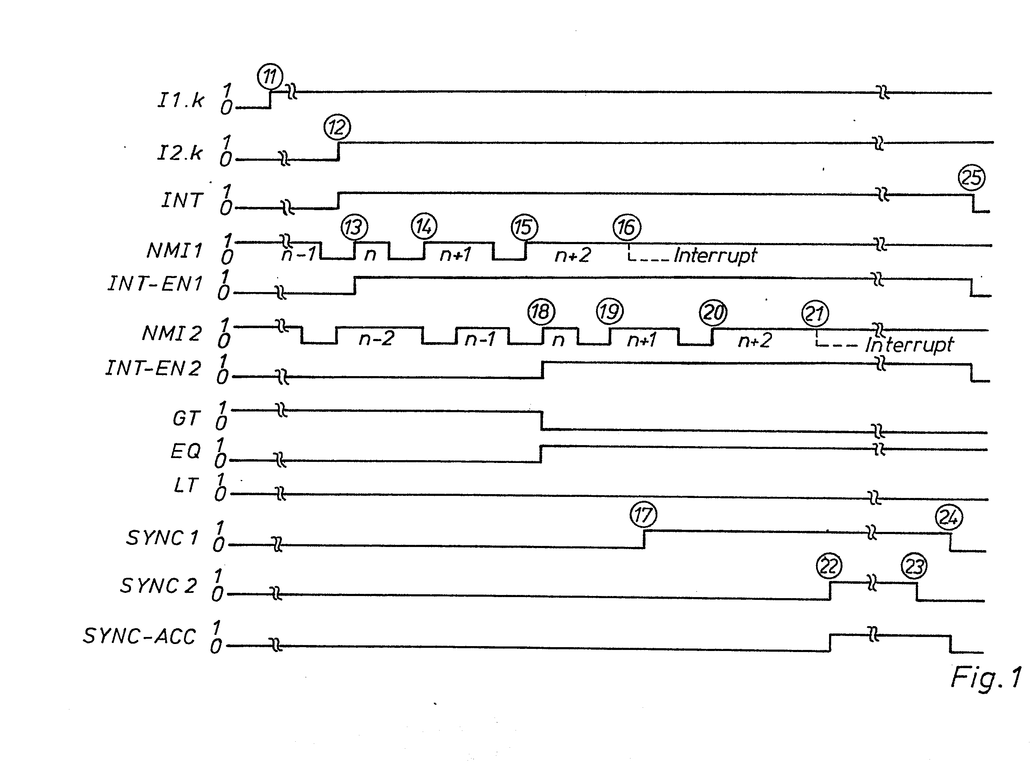

In Fig. 1 ist der Zusammenhang der für die gesamte Synchronisation, d.h. von einer Vorsynchronisation bis zum synchronisierten Datentransfer, wesentlichen binären Signale als Funktion der Zeit untereinander dargestellt. Einzelne charakteristische Zeitpunkte der Signale sind zusätzlich durch eingekreiste Ziffern gekennzeichnet. Die Doppelwellenlinien kennzeichnen einen Zeitabschnitt, in dem die Signale für eine nicht näher definierte Zeit jeweils unverändert bleiben.

Eine Interrupt-Aufforderung eines Prozesses wird zuerst in einer ersten Datenverarbeitungsanlage erkannt, ausgewertet und hat als binäres Signal den für die Synchronisation auszuwertenden Interrupt I1.k zur Folge. Der Buchstabe k bei der Kennzeichnung des Interrupts I1.k deutet an, daß von dem Prozeß k verschiedene Interrupt-Aufforderungen an die Datenverarbeitungsanlagen absetzbar sind, die in der ersten Datenverarbeitungsanlage zu den Interrupts I1.0 bis I1.k und in der zweiten Datenverarbeitungsanlage zu den Interrupts I2.0 bis I2.k führen.

Der Interrupt I1.k der ersten Datenverarbeitungsanlage wird zwar zum Zeitpunkt 11 durch die Änderung des Signalzustands von "0" auf "1" aktiv, bleibt jedoch für die erste Datenverarbeitungsanlage zunächst unwirksam. Der Interrupt I2.k der zweiten Datenverarbeitungsanlage - obwohl durch die gleiche Interrupt-Anforderung des Prozesses ausgelöst - wird erst zu einem späteren Zeitpunkt 12 aktiv, der von Laufzeitverzögerungen auf Leitungen oder in Baugruppen der zweiten Datenverarbeitungsanlage oder unterschiedlichen internen Datenverarbeitungszeiten abhängt, so daß von dem Auftreten des Interrupts I1.k noch nicht auf den Zeitpunkt 12 des Aktivwerdens des Interrupts I2.k geschlossen werden kann.

Aus den beiden erst zum Zeitpunkt 12 aktiven Interrupts I1.k und I2.k wird als Vorsynchronisation durch logische UND-Verknüpfung ein Interrupt-Signal INT gebildet, wie aus der Übereinstimmung der positiven Flanken des Interrupts I2.k und des Interrupt-Signals INT ablesbar ist. Damit wird die Interrupt-Aufforderung des Prozesses wirksam und eine Auswertung eingeleitet, um die Datenverarbeitungsanlage mit dem höchsten Zählerstand zu bestimmen.

Nachfolgend werden die Signale dargestellt, die eine Änderung der Zählerstände und ein Unterbrechen der Programmbearbeitung beim Auftreten des Interrupt-Signals INT bewirken sowie beim Vergleichen der Zählerstände auftreten.

Dazu ist unter dem Interrupt-Signal INT das Fetch-Signal NMI1, auch als Fetch-Impulse NMI1 bezeichnet, der ersten Datenverarbeitungsanlage dargestellt. Die Bezeichnungen n-1, n, n+1 oder n+2 geben in Verbindung mit dem logischen Pegel "1" des Fetch-Signals NMI1 die Ausführungsphase des entsprechenden Programmbefehls, des Makrobefehls, an. Die positiven Flanken des Fetch-Signals NMI1 werden für die erste Datenverarbeitungsanlage gezählt, so daß der Zähler zum Zeitpunkt 13 den der Befehlsbezeichnung n entsprechenden Zählerstand aufweist. Das Fetch-Signal NMI2, auch Fetch-Impulse NMI2, der zweiten Datenverarbeitungsanlage ist mit den entsprechenden Bezeichnungen dargestellt. Jedoch ist zum Zeitpunkt 13 ein Zählerstand n-2 ausgewiesen, da die zweite Datenverarbeitungsanlage in der Verarbeitung der Befehle zurückliegt. Daher wird, ausgelöst durch das Interrupt-Signal INT, als Vergleichsergebnis gespeichert, daß die erste Datenverarbeitungsanlage zum Zeitpunkt 13 den höchsten Zählerstand n aufwies und damit die vorauseilende Datenverarbeitungsanlage darstellt, und so ein Interrupt-Enable-Signal INT-EN1 gebildet.

Zum Ausgleich interner Laufzeiten der Datenverarbeitungsanlagen ist vorgesehen, daß noch zwei weitere Befehle n+1 und n+2 verarbeitet werden, so daß das Interrupt-Enable-Signal INT-EN1 erst zum Zeitpunkt 16 ein Mikroprogramm zur Interrupt-Verarbeitung auslösen kann. Die durch die beiden weiteren Befehle n+1 und n+2 im Fetch-Signal NMI1 zu den Zeitpunkten 14 und 15 auftretenden positiven Flanken werden jedoch nicht mehr gezählt, so daß der Zählerstand n für die erste Datenverarbeitungsanlage unverändert bestehen bleibt.

Wie an dem Fetch-Signal NMI2 zu erkennen ist, sind vom Zeitpunkt 12 an, dem Wirksamwerden des Interrupt-Signals INT, in der zweiten Datenverarbeitungsanlage zunächst noch die Befehle n-2 und n-1 zu verarbeiten, so daß ein Gleichziehen mit dem Zählerstand n der ersten Datenverarbeitungsanlage erst zum Zeitpunkt 18 mit der positiven Flanke des Befehls n erfolgt. Die beiden Befehle n+1 und n+2 werden dann ebenso in der zweiten Datenverarbeitungsanlage noch verarbeitet und danach zum Zeitpunkt 21 das Mikroprogramm zur Interrupt-Verarbeitung vom anstehenden Interrupt-Enable-Signal INT-EN2 ausgelöst.

An Vergleichssignalen GT, EQ und LT ist das Ergebnis des Vergleichs der Zählerstände beider Datenverarbeitungsanlagen abzulesen. Zunächst ist der Zählerstand der ersten Datenverarbeitungsanlage größer als der der zweiten Datenverarbeitungsanlage und das Vergleichssignal GT hat den logischen Zustand "1". Zum Zeitpunkt 18 geht das Vergleichssignal EQ vom logischen Zustand "0" in den Zustand "1" über, da die zweite Datenverarbeitungsanlage den Befehl n bearbeitet und beide Zählerstände gleich sind. Da andererseits der Zählerstand der ersten Datenverarbeitungsanlage nie kleiner als der Zählerstand der zweiten Datenverarbeitungsanlage ist, bleibt das Vergleichssignal LT stets im Zustand "0".

Im wesentlichen sind damit am Zustandekommen des Interrupt-Enable-Signals INT-EN1 der ersten Datenverarbeitungsanlage mit dem höchsten Zählerstand das Interrupt-Signal INT, das Fetch-Signal NMI1 und das Vergleichssignal GT beteiligt, wohingegen für die zweite Datenverarbeitungsanlage das Interrupt-Enable-Signal INT-EN2 vom Interrupt-Signal INT, dem Fetch-Signal NMI2 und dem Vergleichssignal EQ abhängig ist.

Im unteren Teil der Fig. 1 sind die unmittelbar an der Synchronisation beteiligten Signale dargestellt.

Das zum Zeitpunkt 16 gestartete Mikroprogramm zur Interrupt-Verarbeitung in der ersten Datenverarbeitungsanlage schaltet zum Zeitpunkt 17 das Synchron- signal SYNC 1 in den logischen Zustand "1". Das gleiche Mikroprogramm ist in der zweiten zurückliegenden Datenverarbeitungsanlage jedoch erst zum Zeitpunkt 21 gestartet worden, so daß das entsprechende Synchronsignal SYNC 2 erst zum Zeitpunkt 22 vom Zustand "0" in den Zustand "1" wechselt. Damit sind von diesem Zeitpunkt 22 an beide Synchronsignale SYNC 1 und SYNC 2 eingeschaltet, lösen ein Synchron-Accept-Signal SYNC-ACC aus und der synchronisierte Datentransfer beginnt unter der Kontrolle des Interrupt-Mikroprogramms. Damit ist eine Feinsynchronisation bis hin zu dem den synchronisierten Datentransfer direkt auslösenden Mikroprogrammschritt erreicht. Das Synchron-Accept-Signal SYNC-ACC und damit die Freigabe des Datentransfers wird durch das am längsten anstehende Synchronsignal SYNC 1 zum Zeitpunkt 24 beendet, um sicherzustellen, daß bei unabhängigen Takten der Datenverarbeitungsanlagen die Freigabe des Datentransfers für die langsamere Datenverarbeitungsanlage bestehen bleibt. Die Setzbedingung für das Synchron-Accept-Signal SYNC-ACC ist damit die Konjunktion der Synchron-Signale SYNC 1 und SYNC 2, wohingegen die Löschbedingung ihre Disjunktion ist.

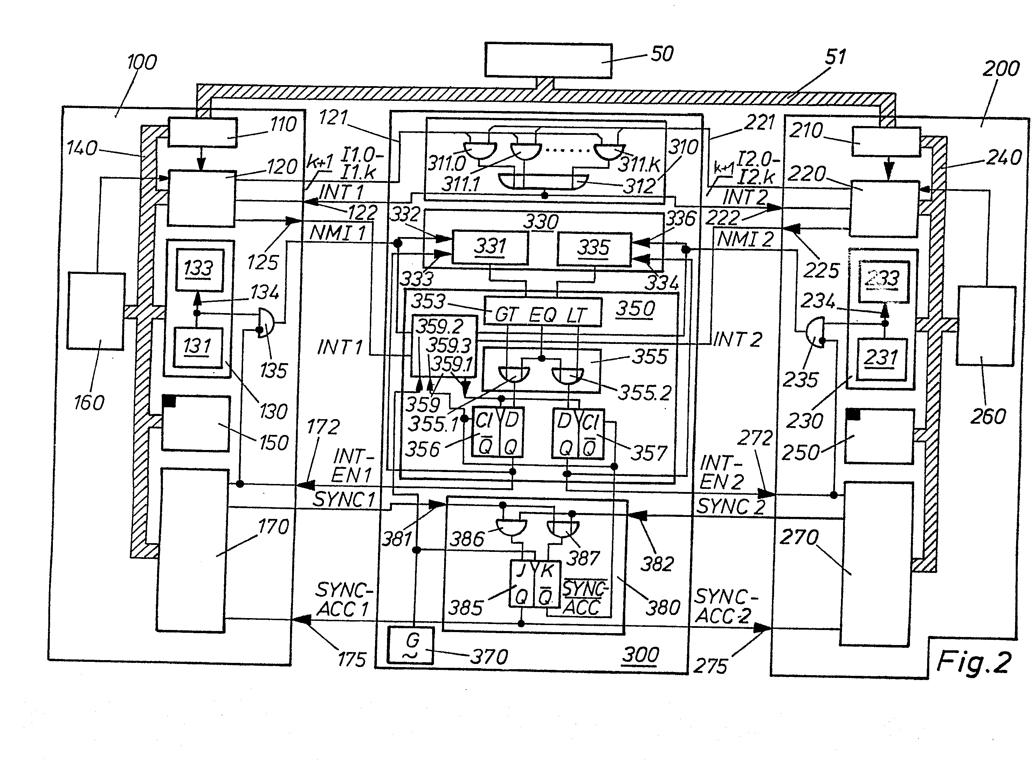

In Fig. 2 ist das Blockschaltbild eines Prozeßsteuerungssystems dargestellt, dessen Kern ein Doppelrechnersystem ist, um für die anfallenden Steuerungsaufgaben ein höchstmögliches Maß an Sicherheit zu erreichen.

Der Prozeß 50 stellt ganz allgemein eine zu steuernde oder regelnde technische, physikalische oder chemische Anlage dar, die über den Prozeßbus 51 mit einer ersten Datenverarbeitungsanlage 100 und einer zweiten Datenverarbeitungsanlage 200 verbunden ist.

Über den Prozeßbus 51 werden alle erforderlichen Steuerungs- oder Regeldaten von den Datenverarbeitungsanlagen 100 bzw. 200 an den Prozeß 50 und umgekehrt alle Meß- und Prüfergebnisse, Fehler und Alarmmeldungen sowie weitere für Steuerung und Dokumentation erforderliche Informationen an die Datenverarbeitungsanlagen 100 und 200 übertragen. Dabei wird der Datenaustausch für einen Großteil dieser Daten durch eine Interrupt-Anforderung des Prozesses 50 oder eine der Datenverarbeitungsanlagen 100, 200 initiiert. Diese Interrupt-Anforderung vom Prozeß 50 oder auch von der Peripherie kann einerseits in entsprechenden Interfaceschaltungen der Datenverarbeitungsanlagen 100, 200 aus den übertragenen Daten erkannt werden. Es sind andererseits häufig Systeme üblich, bei denen spezielle Interrupt-Verbindungen vom Prozeß oder der Peripherie zu den entsprechenden Interfaceschaltungen vorgesehen sind, an denen binäre Signale Interrupt-Anforderungen unmittelbar anzeigen. Für die weitere Beschreibung soll der Einfachheit halber angenommen werden, daß der Prozeß 50 über den Prozeßbus 51 Daten abgesetzt hat, die einen Interrupt bewirken, nach dessen Auswertung in den Datenverarbeitungsanlagen 100 und 200 ein Datentransfer vom Prozeß 50 her erfolgt.

Die Datenverarbeitungsanlagen 100 und 200 sind völlig identisch aufgebaut und über identische Ein- und Ausgänge mit einer Überwachungseinheit 300 verbunden. Daher werden für die Beschreibung gleiche Bezeichnungen der Baugruppen gewählt, bei denen sich jedoch die Bezugszeichen in der ersten Ziffer unterscheiden.

Die Datenverarbeitungsanlage 100, 200 weist ein Prozeß-Interface 110, 210 mit nachgeschalteter, an sich bekannter Interrupt-Logik 120, 220 auf, das an den Prozeßbus 51 angeschlossen ist. Steuerung und Überwachung aller zentralen Funktionen der Datenverarbeitungsanlage 100, 200 erfolgt durch den Zentralprozessor 130, 230, der ein Steuerwerk 131, 231 aufweist, das ausgangsseitig mit einem Programmregister 133, 233 über einen Fetch-Impulseingang 134, 234 zusammengeschaltet ist. Zum Austausch von Steuer- und Ergebnisdaten ist der Zentralprozessor 130, 230 über ein internes Bussystem 140, 240 mit einem Interrupt-Prozessor 170, 270 sowie dem Prozeß-Interface 110, 210 und der Interrupt-Logik 120, 220 verbunden. Unter der Baueinheit "Peripheriegeräte 160, 260" sind dabei alle für den Betrieb der Datenverarbeitungsanlage 100, 200 erforderlichen peripheren Geräte, wie Bandgeräte, Plattenspeicher, Datensichtgeräte etc. einschließlich zugehöriger Interfaces, zusammengefaßt. Zur Weitergabe von Interrupts sind diese Peripheriegeräte 160, 260 ebenfalls mit der Interrupt-Logik 120, 220 verbunden. Die Interrupt-Logik 120, 220 ist über k+1 verschiedene Leitungen 121, 221, an eine Interrupt-Enable-Einheit 310 angeschlossen, die eine Baugruppe der Überwachungseinheit 300 ist. Die an den k+1 Leitungen 121 bzw. 221 getrennt anstehenden Interrupts I1.0 bis I1.k bzw. I2.0 bis I2.k sind in der Interrupt-Einheit 310 an UND-Tore 311.0 bis 311.k angeschaltet, die ausgangsseitig über das ODER-Tor 312 zusammengefaßt werden. An dem ODER-Tor 312, das über Rückleitungen mit der Interrupt-Logik 120, 220 verbunden ist, steht ausgangsseitig das Interrupt-Signal INT als für beide Datenverarbeitungsanlagen 100 und 200 identische Interrupt-Signale INT1 und INT2 an.

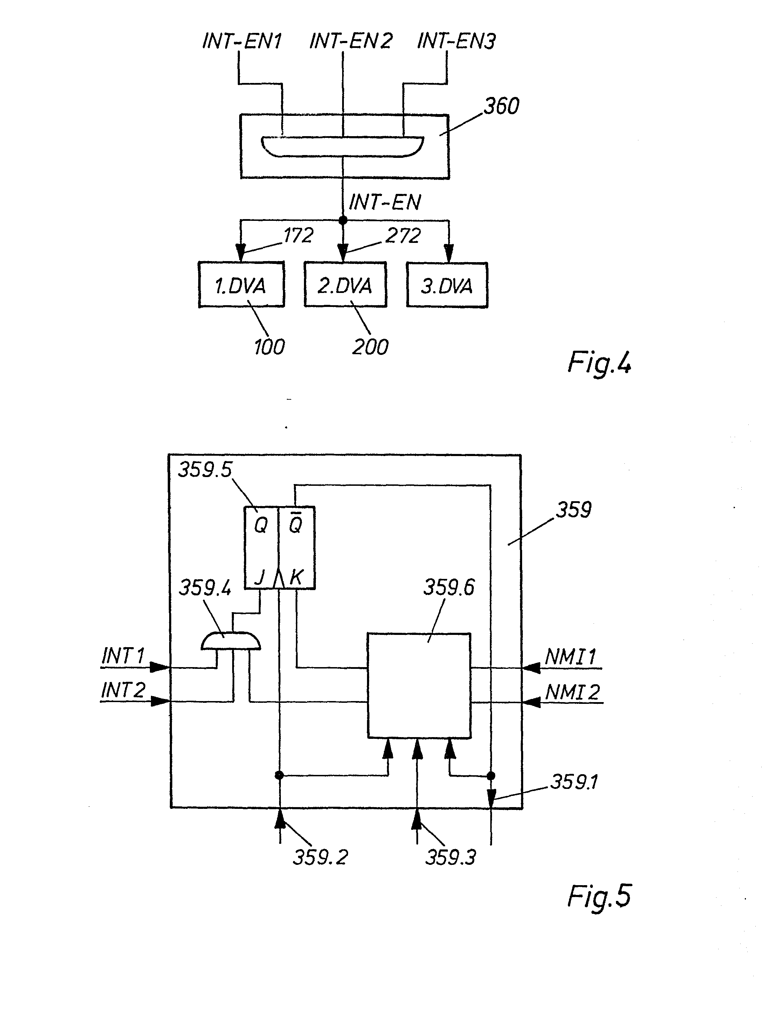

Die Überwachungseinheit 300 weist ferner eine Zählereinheit 330 mit dem der ersten Datenverarbeitungsanlage 100 zugeordneten Zähler 331 und dem der zweiten Datenverarbeitungsanlage 200 zugeordneten Zähler 335 auf. Ihre Zählimpulseingänge 332 und 336 sind über UND-Stufen 135 und 235 an die Fetch-Impulseingänge 134 und 234 der Programmregister 133 und 233 angeschlossen. Der Zählereinheit 330 ist eine Vergleichseinheit 350 in der Weise nachgeschaltet, daß die Zähler 331 und 335 an einen Vergleicher 353 angeschlossen sind. Die Vergleichseinheit 350 weist ferner eine Auswerteschaltung 355 mit den ODER-Gattern 355.1 und 355.2 und nachgeschalteten Kippschaltungen 356 und 357 auf, deren Takteingänge mit einer Logikschaltung 359 über deren Steuerausgang 359.1 verbunden sind. Das ODER-Gatter 355.1 zum Ansteuern der Kippschaltung 356 ist mit dem GT- und EQ-Ausgang des Vergleichers 353 und das ODER-Tor 355.2 zum Ansteuern der Kippschaltung 357 mit dem EQ- und dem LT-Ausgang verbunden. An die Logikschaltung 359, von der weitere Einzelheiten in Fig. 5 dargestellt sind, ist eingangsseitig über einen Taktsignaleingang 359.2 ein Taktgeber 370 angeschlossen und sie ist über Verbindungen zu Interrupt-Signalausgängen 125, 225 und zu Fetch-Impulseingängen 134, 234 mit dem Interrupt-Signal INT1, INT2 und den Fetch-Impulsen NMI1, NMI2 ansteuerbar.

Die Kippschaltungen 356 und 357 sind den Datenverarbeitungsanlagen 100 bzw. 200 jeweils speziell zugeordnet. Ihre Q-Ausgänge sind daher über Zählersteuereingänge 333 bzw. 334 mit den entsprechenden Zählern 331 bzw. 335 sowie über die Interrupt-Enable-Eingänge 172 bzw. 272 mit den Interrupt-Prozessoren 170 bzw. 270 und invertierenden Eingängen der UND-Stufen 135 bzw. 235 zusammengeschaltet.

Eine in die Überwachungseinheit 300 mit einbezogene Synchroneinheit 380 ist mit ihren Synchroneingängen 381 und 382 an die Interrupt-Prozessoren 170 und 270 angeschlossen. Die Synchroneingänge 381 und 382 sind zur Ansteuerung des J-Eingangs eines Flip-Flops 385 über eine UND-Schaltung 386 und zur Ansteuerung des K-Eingangs über eine ODER-Schaltung 387 verbunden. Der Q-Ausgang des Flip-Flops 385 ist zum Auslösen von synchronisierten Datentransfers durch das Synchron-Accept-Signal SYNC-ACC mit den Synchron-Accept-Eingängen 175 und 275 der Interrupt-Prozessoren 170, 270 verbunden. Der $\overline{Q}$-Ausgang des Flip-Flops 385 mit dem invertierten Synchron-Accept-Signal $\overline{\text{SYNC-ACC}}$ ist an die Clear-Eingänge der Kippschaltungen 356 und 357 und an den Rücksetzeingang 359.3 der Logikschaltung 359 angeschlossen, außerdem ist das Flip-Flop 385 zur Übernahme von Steuertakten mit dem Taktgeber 370 eingangsseitig verbunden.

Die Funktionsweise soll im folgenden noch einmal zusammengefaßt werden. Aufgrund der vom Prozeß 50 über den Prozeßbus 51 an die Datenverarbeitungsanlagen 100, 200 übertragenen Daten wird im Prozeß-Interface 110 ein Interrupt generiert, an die Interrupt-Logik 120, 220 weitergeschaltet und dort gespeichert. Die Interrupt-Logik 120, 220 erzeugt in bekannter Weise ein binäres Signal wie zum Auslösen einer Interrupt-Verarbeitung erforderlich wäre, wenn nur eine einzelne Datenverarbeitungsanlage am Prozeßsteuerungssystem beteiligt ist. Bei zwei Datenverarbeitungsanlagen 100, 200 werden hingegen einander entsprechende Interrupts I1.k und I2.k, z. B. I1.1 und I2.1, generiert, die nicht mehr direkt die Interrupt-Verarbeitung sondern erst einen Synchronisationsvorgang der Datenverarbeitungsanla-

gen einleiten. Die Interrupts I1.1 und I2.1 werden über die Leitungen 121 und 221 an die Überwachungseinheit 300 übertragen, in dem UND-Tor 311.1 verknüpft und dann durchgeschaltet, wenn beide Interrupts I1.1 und I2.1 am UND-Tor 311.1 den logischen Wert "1" angenommen haben. Über das ODER-Tor 312 ergibt sich dann das Interrupt-Signal INT, das als Interrupt-Signale INT1, INT2 über die Interrupt-Logik 120, 220, in der dann z. B. noch eine Statusauswertung erfolgt, an die Vergleichseinheit 350 durchgeschaltet wird.

Von den Ausgängen GT, EQ, LT des Vergleichers 353 hat jeweils nur ein Ausgang den logischen Zustand "1". Hat beispielsweise der Zähler 331, der die Fetch-Impulse NMI1 am Programmregister 133 zählt, den größeren Zählerstand, so ist der GT-Ausgang auf logisch "1", wie auch in Fig. 1 für das Vergleichssignal GT dargestellt ist. Über das ODER-Gatter 355.1 liegt somit der logische Pegel "1" auch am Dateneingang der Kippschaltung 356, die mit dem nächsten Taktimpuls durchgeschaltet wird, wenn die Auswertung von der Logikschaltung 359 aufgrund der anstehenden Interrupt-Signale INT1, INT2 und Fetch-Impulse NMI1 und NMI2 freigegeben wird. Der Q-Ausgang der Kippschaltung 356 weist dann den logischen Pegel "1" des Interrupt-Enable-Signals INT-EN1 zum Ansteuern des Interrupt-Prozessors 170 und zum Stoppen des Zählers 331 auf. Aufgrund des Interrupt-Enable-Signals INT-EN1 wird im Interrupt-Prozessor 170 ein Interrupt-Mikroprogramm gestartet und löst nach einer Folge von Befehlen, die dazu dienen den Verarbeitungszustand der Datenverarbeitungsanlage 100 vor dem Interrupt zu retten, um nach Beendung des Interrupts einen Weiterlauf des Programms zu ermöglichen, das Synchronsignal SYNC1 aus, das am Synchroneingang 381 den logischen Zustand "1" annimmt. Da eine erforderliche Rückmeldung über den Synchron-Accept-Eingang 175 zum Starten des synchronen Datentransfers zunächst nicht eintrifft - am Synchroneingang 382 ist noch der logische Zustand "0" vorhanden - geht der Interrupt-Prozessor 170 zunächst in eine Warteschleife.

Nach dem Gleichziehen des Zählers 335 mit dem Zähler 331 ergibt sich auch am EQ-Ausgang des Vergleichers 353 ein logischer Zustand "1", der über das ODER-Gatter 355.2 die bereits durch die Logikschaltung 359 vorbereitete Kippschaltung 357 umschaltet und somit auch in der zweiten Datenverarbeitungsanlage 200 den Interrupt-Prozessor 270 startet, der dann mikrobefehlgesteuert ein Synchronsignal SYNC2 mit dem logischen Pegel "1" an den Synchroneingang 382 anlegt. Damit stehen beide Interrupt-Prozessoren 172, 270 an dem gleichen Mikrobefehl. Das Flip-Flop 385 ändert nun mit dem nächsten Taktimpuls seinen Zustand, startet über die Synchron-Accept-Eingänge 175, 275 den synchronisierten Datentransfer und setzt die Kippschaltungen 356 und 357 und die Logikschaltung 359 zurück, um einen Neustart des Interrupt-Mikroprogramms zu verhindern. Das Flip-Flop 385 und damit das Synchron-Accept-Signal SYNC-ACC wird erst dann wieder zurückgesetzt, wenn an seinem K-Eingang der logische Zustand "0" vorliegt. Das ist jedoch erst der Fall, wenn beide Synchronsignale SYNC1 und SYNC2 mikroprogrammgesteuert den logischen Zustand "0" angenommen und somit angezeigt haben, das der synchronisierte Datentransfer beendet ist. Die Rückmeldung dieses Zustandes vom Interrupt-Prozessor 170 an das Steuerwerk 131 führt dann zum nächsten Fetch-Impuls NMI1, NMI2 und zur Fortsetzung der Programmverarbeitung.

Soll gemäß einem zweiten Ausführungsbeispiel der Prozeß 50 zur Steigerung der Sicherheit zusätzlich durch eine dritte, ebenfalls über den Prozeßbus 51 angekoppelte Datenverarbeitungsanlage gesteuert werden, so bleibt das ohne schaltungstechnische Auswirkungen auf die beiden bereits eingesetzten Datenverarbeitungsanlagen. Allein die Überwachungseinheit 300 ist zu modifizieren. Dabei sind die Änderungen in der Interrupt-Einheit 310 und der Synchroneinheit 380 besonders einfach. In der Interrupt-Einheit 310 sind UND-Tore 311.0 bis 311.k mit einem zusätzlichen dritten Eingang für Interrupts I3.0 bis I3.k vorzusehen, weiterhin ist eine dritte Rückleitung für ein Interrupt-Signal INT3 an das ODER-Tor 312 anzuschließen.

In der Synchroneinheit 380 sind die UND-Schaltung 386 und die ODER-Schaltung 387 jeweils um einen Eingang für ein Synchronsignal SYNC3 zu erweitern und der Q-Ausgang des Flip-Flops 385 ist zusätzlich mit einem Synchron-Accept-Eingang der dritten Datenverarbeitungsanlage zu verbinden.

In Fig. 3 sind die Erweiterungen der Zählereinheit 330 und der Vergleichseinheit 350 als Blockschaltbild dargestellt. Die Zählereinheit 330 weist einen weiteren Zähler 337 auf, an dessen Zählimpulseingang 338 ein Fetch-Impulssignal NMI3 der dritten Datenverarbeitungsanlage ansteht. Die Vergleichseinheit 350 weist zwei weitere Vergleicher 353.1 und 353.2 auf, wobei der Vergleicher 353.1 eingangsseitig mit dem Zähler 331 sowie mit dem weiteren Zähler 337 und der Vergleicher 353.2 eingangsseitig mit dem Zähler 335 sowie mit dem weiteren Zähler 337 verbunden ist. Durch die beiden zusätzlichen Vergleicher 353.1 und 353.2 ist eine eindeutige Entscheidung zu treffen, welcher der drei möglichen Zählerstände der Zähler 331, 335 und 337 der größte ist und ob die jeweils anderen Zählerstände mit dem größten Zählerstand gleichgezogen sind. Dazu wird die Auswerteschaltung 355 um UND-Gatter 354.1 bis 354.9 erweitert. Das UND-Gatter 354.1 ist an die GT-Ausgänge der Vergleicher 353 und 353.1 angeschlossen und nimmt ausgangsseitig den logischen Zustand "1" an, wenn der Zählerstand des Zählers 331 größer ist als der des Zählers 335 und der des Zählers 337. Das UND-Gatter 354.2 ist mit dem LT-Ausgang des Vergleichers 353 und dem GT-Ausgang des Vergleichers 353.2 verbunden und sein ausgangsseitiger logischer Zustand "1" gibt an, daß der Zähler 335 den größten Zählerstand aufweist. Das UND-Gatter 354.3 ist ferner mit der LT-Ausgängen des Vergleichers 353.1 und 353.2 verbunden und kennzeichnet durch den logischen Zustand "1", daß der Zähler 337 den größten Zählerstand aufweist. An das ODER-Gatter 355.3 sind eingangsseitig das UND-Gatter 354.1, das mit dem EQ-Ausgang des Vergleichers 353 und mit dem UND-Gatter 354.2 verbundene UND-Gatter 354.4 sowie das mit dem EQ-Ausgang des Vergleichers 353.1 und dem UND-Gatter 354.3 verbundene UND-Gatter 354.5 angeschlossen. Das ODER-Gatter 355.4 ist eingangsseitig mit dem UND-Gatter 354.2, dem mit dem EQ-Ausgang des Vergleichers 353 und dem UND-Gatter 354.1 eingangsseitig verbundenen UND-Gatter 354.6 sowie dem mit dem EQ-Ausgang des Vergleichers 353.2 und dem UND-Gatter 354.3 eingangsseitig verbundenen UND-Gatter 354.7 verbunden. Die ODER-Gatter 355.3 und 355.4 entsprechen den um jeweils einen Eingang erweiterten ODER-Gattern 355.1 und 355.2 in Fig. 2. Ein ODER-Gatter 355.5 mit einer entsprechenden Beschaltung ist zur Ansteuerung der dritten Datenverarbeitungsanlage in der Auswerteschaltung 355 darüber hinaus vorgesehen. Das ODER-Gatter 355.5 ist eingangsseitig an das UND-Gatter 354.3, über das UND-Gatter 354.8 an den EQ-Ausgang des Vergleichers 353.1 und das UND-Gatter 354.1 sowie über das UND-Gatter 354.9 an den EQ-Ausgang des Vergleichers 353.2 und das UND-Gatter 354.2 angeschlossen.

Ausgangsseitig sind die ODER-Gatter 355.3 und 355.4, wie bereits die ODER-Gatter 355.1 und 355.2 in Fig. 2, mit den Kippschaltungen 356 und 357 verbunden. Dem zusätzlichen ODER-Gatter 355.5 ist eine weitere Kippschaltung 358 nachgeschaltet, die mit ihrem Takteingang ebenso an die Logikschaltung 359 und mit ihrem Clear-Eingang an die Synchroneinheit 380 (hier nicht dargestellt) angeschlossen ist. An dem Q-Ausgang der Kippschaltung 358 steht ausgangsseitig das Interrupt-Enable-Signal INT-EN3 zum Starten des Interrupt-Mikroprogramms der dritten Datenverarbeitungsanlage an. Der Q-Ausgang ist ferner mit dem Zähler 337 verbunden, um den Zählerstand bei Auftreten des Interrupt-Enable-Signals INT-EN3 zu löschen.

In Fig. 4 ist eine Zusatzschaltung 360 dargestellt, die die Vorrichtung gemäß dem zweiten Ausführungsbeispiel zu einem dritten Ausführungsbeispiel ergänzt. An der Zusatzschaltung 360 stehen eingangsseitig die Interrupt-Enable-Signale INT-EN1, INT-EN2 und INT-EN3, die Ausgangssignale der Kippschaltungen 356, 357 und 358 in Fig. 3 an. Die logische UND-Verknüpfung der der jeweiligen Datenverarbeitungsanlage zugeordneten Interrupt-Enable-Signale INT-EN1 bis INT-EN3 ergibt ausgangsseitig ein gemeinsames Interrupt-Enable-Signal INT-EN an der Zusatzschaltung 360, der die Interrupt-Prozessoren der drei Datenverarbeitungsanlagen eingangsseitig nachgeschaltet sind. Das gemeinsame Interrupt-Enable-Signal INT-EN bewirkt beim Übergang auf den logischen Zustand "1" den gleichzeitigen Start der Interrupt-Verarbeitung, d.h. des Interrupt-Mikroprogramms in allen Datenverarbeitungsanlagen.

In Fig. 5 ist die in dem ersten Ausführungsbeispiel eingesetzte Logikschaltung 359 dargestellt. Die Logikschaltung 359 weist eine UND-Schaltung 359.4, eine Kippstufe 359.5 und ein Schaltwerk 359.6 auf. Die UND-Schaltung 359.1 ist eingangsseitig von den Interrupt-Signalen INT1 und INT2 sowie dem Schaltwerk 359.6 ansteuerbar und ausgangsseitig mit dem J-Eingang der Kippstufe 359.5 verbunden. Ein K-Eingang der Kippstufe 359.5 ist an das Schaltwerk 359.6 angeschlossen. Eingangsseitig ist das Schaltwerk mit den Fetch-Impulsen NMI1 und NMI2 ansteuerbar und mit dem Taktsignaleingang 359.2, dem Rücksetzeingang 359.3 sowie dem $\overline{Q}$-Ausgang der Kippstufe 359.5 zusammengeschaltet. Der $\overline{Q}$-Ausgang der Kippstufe 359.5, die ebenfalls mit dem Taktsignaleingang 359.2 verbunden ist, ist außerdem an den Steuerausgang 359.1 angeschlossen.

Durch das an sich bekannte Schaltwerk 359.6 wird die Auswertung der Interrupt-Signale INT1, INT2 bezüglich der Fetch-Impulse NMI1 und NMI2 sowie des Taktes koordiniert. Insbesondere wird durch die Rückkopplung vom $\overline{Q}$-Ausgang der Kippstufe 359.5 auf das Schaltwerk 359.6 gewährleistet, daß erkannte Interrupts I1.k, I2.k, aus denen die Interrupt-Signale INT1, INT2 resultieren, ausgeführt sind, bevor neue wirksam werden. Beide Kippschaltungen 356 und 357 (Fig.2) müssen daher erst geschaltet und die Interrupt-Prozessoren ausgelöst haben, bevor das Flip-Flop 385 (Fig. 2) das Schaltwerk
359.6 in seinen Ausgangszustand zurücksetzt.

- . - . - . -

PATENTANSPRÜCHE

1. Verfahren zur Synchronisation von zwei oder mehr Datenverarbeitungsanlagen, die zur wechselweisen Steuerung von nicht unterbrechbaren Prozessen im Stand-By-Betrieb eingesetzt sind und die jeweils gleiche, aus Befehlen aufgebaute Programme verarbeiten, dadurch gekennzeichnet, daß verarbeitete Befehle für jede Datenverarbeitungsanlage (100, 200) getrennt gezählt und laufend die Zählerstände verglichen werden, daß in der Datenverarbeitungsanlage (100, 200) mit einem höchsten Zählerstand die Verarbeitung weiterer Befehle nach dem Auftreten eines Interrupts (I1.k, I2.k) unterbrochen wird, daß in der oder den im Zählerstand zurückliegenden Datenverarbeitungsanlagen (100, 200) nach Erreichen dieses höchsten Zählerstandes die Verarbeitung weiterer Befehle ebenso unterbrochen wird und daß bei gleichem Zählerstand aller Datenverarbeitungsanlagen (100, 200) ein synchronisierter Datentransfer ausgelöst wird.

2. Verfahren nach Anspruch 1, dadurch gekennzeichnet, daß die Zahl verarbeiteter Befehle durch Zählen der Fetch-Impulse (NMI1, NMI2, NMI3) bestimmt wird, die das Laden einer Adresse des jeweils nächsten zu verarbetenden Befehls bewirken.

3. Verfahren nach Anspruch 1 oder 2, dadurch gekennzeichnet, daß das Unterbrechen der Verarbeitung von einem jeder Datenverarbeitungsanlage zugeordneten Interrupt-Enable-Signal (INT-EN1, INT-EN2, INT-EN3, INT-EN) ausgelöst wird, daß das Interrupt-Enable-Signal (INT-EN1, INT-EN2, INT-EN3, INT-EN) durch ein Interrupt-Signal (INT, INT1, INT2, INT3) aktiviert wird, wenn beim Vergleich die jeweilige Datenverarbeitungsanlage (100, 200) den größten Zählerstand aufweist oder mit dem größten Zählerstand gleichgezogen hat, und daß das Interrupt-Signal (INT, INT1, INT2, INT3) nur dann ansteht, wenn ein Interrupt (I1.k, I2.k) von mindestens zwei Datenverarbeitungsanlagen(100,200) aufgenommen worden ist.

4. Verfahren nach Anspruch 3, dadurch gekennzeichnet, daß beim Anstehen eines Interrupt-Enable-Signals (INT-EN1, INT-EN2, INT-EN3, INT-EN) unmittelbar das Zählen der Fetch-Impulse(NMI1, NMI2, NMI3) gestoppt wird, während das Unterbrechen der Verarbeitung weitere Befehle um eine vorgebbare Anzahl von Befehlen verzögert ausgelöst wird.

5. Verfahren nach Anspruch 3 oder 4, dadurch gekennzeichnet, daß durch das Interrupt-Enable-Signal (INT-EN1, INT-EN2, INT-EN3, INT-EN) ein Mikroprogramm gestartet wird und daß das Mikroprogramm ein Synchron-Signal (SYNC1, SYNC2) generiert, welches das Auslösen des synchronisierten Datentransfers einleitet.

6. Verfahren nach Anspruch 5, dadurch gekennzeichnet, daß das Starten des Mikroprogramms durch das Interrupt-Enable-Signal (INT-EN1, INT-EN2, INT-EN3, INT-EN) bei Zählergleichstand aller Datenverarbeitungsanlagen (100, 200) freigegeben wird.

7. Verfahren nach Anspruch 5 oder 6, dadurch gekennzeichnet, daß durch Konjunktion der Synchronsignale (SYNC1, SYNC2) aller Datenverarbeitungsanlagen (100, 200) ein das Auslösen des synchronisierten Datentransfers bewirkendes Synchron-Accept-Signal (SYNC-ACC) gebildet
wird.

8. Verfahren nach Anspruch 7, dadurch gekennzeichnet, daß das Synchron-Accept-Signal (SYNC-
ACC) mit dem von allen Datenverarbeitungsanlagen (100, 200) zuletzt verschwindenden Synchronsignal (SYNC1, SYNC2) gelöscht wird.

9. Verfahren nach einem der Ansprüche 1 bis 8, dadurch gekennzeichnet, daß Interrupts (I1.k, I2.k)
durch programmierte Befehle ausgelöst werden.

10. Verfahren nach einem der Ansprüche 1 bis 9, dadurch gekennzeichnet, daß die Zählerstände nach
Beenden des synchronisierten Datentransfers gelöscht werden.

11. Vorrichtung zum Ausüben des Verfahrens nach einem der Ansprüche 1 bis 10, dadurch gekennzeichnet, daß eine Überwachungseinheit (300) vorgesehen ist, an welche die Datenverarbeitungsanlagen (100, 200) angeschlossen sind, daß die
Überwachungseinheit (300) eine Zählereinheit
(330) mit den jeweiligen Datenverarbeitungsanlagen (100, 200) zugeordneten Zählern (331, 332),
eine Vergleichseinheit (350) zum Vergleichen der
Zählerstände und eine Synchroneinheit (380) zum
Auslösen des synchronisierten Datentransfers aufweist, daß die Zählereinheit (330) eingangsseitig mit Fetch-Impulseingängen (134, 234) der Datenverarbeitungsanlagen (100, 200) verbunden ist,
daß die Vergleichseinheit (350) eingangsseitig
mit Interrupt-Signalausgängen (125, 225) der Datenverarbeitungsanlagen (100, 200), mit der Zählereinheit (330) und der Synchroneinheit (380) sowie ausgangsseitig mit Zählersteuereingängen (333, 334) und mit Interrupt-Enable-Eingängen (172, 272) der Datenverarbeitungsanlagen (100, 200) verbunden ist, daß die Synchroneinheit (380) eingangsseitig mit Synchronausgängen und ausgangsseitig mit Synchroneingängen (175, 275) der Datenverarbeitungsanlagen (100, 200) zusammengeschaltet ist.

12. Vorrichtung nach Anspruch 11, dadurch gekennzeichnet, daß die Überwachungseinheit (300) eine Interrupt-Einheit (310) enthält, daß die Interrupt-Einheit (310) Konjunktionsschaltungen (UND-Tore 311.0 bis 311.k)aufweist, an die eingangsseitig gleichartige Interrupt-Ausgänge der Datenverarbeitungsanlagen (100, 200) angeschlossen sind, daß den Konjunktionsschaltungen (UND-Tore 311.0 bis 331.k) eine Disjunktionsschaltung (ODER-Tor 312) nachgeschaltet ist, an der ausgangsseitig das Interrupt-Signal (INT1, INT2) ansteht.

13. Vorrichtung nach Anspruch 12, dadurch gekennzeichnet, daß die Vergleichseinheit (350) mit den Zählern (331, 335, 337) verbundene Vergleicher (353, 353.1, 353.2) aufweist, denen über eine Auswerteschaltung (355) jeder Datenverarbeitungsanlage (100, 200) zugeordnete Kippschaltungen (356, 357, 358) nachgeschaltet sind, daß die Kippschaltungen (356, 357, 358) über ihren Takteingang mit einer taktgesteuerten Logikschaltung (359), an der eingangsseitig das Interrupt-Signal (INT1, INT2, INT3) ansteht, verbunden sind, daß die Kippschaltungen (356, 357, 358) über ihren Clear-Eingang mit der Synchroneinheit (380) zusammengeschaltet sind, daß die Kippschaltungen (356, 357, 358) ausgangsseitig mit den Zählersteuereingängen (333, 334) und den Interrupt-Enable-Eingängen (172, 272) verbunden sind und daß die Vergleicher (353, 353.1, 353.2) Größer-, Gleich- und Kleiner Ausgänge (GT, EQ, LT) aufweisen, die über die Auswerteschaltung (355) mit Dateneingängen der Kippschaltungen (356, 357, 358) derart verbunden sind, daß die Kippschaltung (356, 357, 358) setzbar ist, wenn der Zählerstand der jeweiligen Datenverarbeitungsanlage (100, 200) größer als alle anderen Zählerstände oder gleich dem größten Zählerstand ist.

14. Vorrichtung nach Anspruch 13, dadurch gekennzeichnet, daß die Synchroneinheit (380) ein Flip-Flop (385) mit J- und K-Eingängen aufweist, daß an dem J-Eingang die über eine UND-Logik (386) zusammengeschalteten Synchronsignale (SYNC1, SYNC2) und an dem K-Eingang die über eine ODER-Logik (387) zusammengeschalteten Synchronsignale (SYNC1, SYNC2) anstehen, daß ein Q-Ausgang des Flip-Flops (385) mit den Synchroneingängen (175, 275) der Datenverarbeitungsanlagen (100, 200) und daß ein $\overline{Q}$-Ausgang des Flip-Flops (385) mit den Clear-Eingängen der Kippschaltungen (356, 357, 358) verbunden ist.

- . - . - . -

Fig.1

1/4

- 1 -

0104490

Fig.2

2/4

0104490

Fig.3

INT-EN1     INT-EN2     INT-EN3

*360*

INT-EN

*172*        *272*

| 1.DVA | 2.DVA | 3.DVA |

*100*        *200*

*Fig.4*

*359.5*

Q   Q̄

J   K

*359.4*

*359.6*

INT1 →                                    ← NMI1

INT2 →                                    ← NMI2

*359*

*359.1*

*359.2*        *359.3*

*Fig.5*